# EUROPÄISCHE PATENTSCHRIFT

(11) **EP 0 492 109 B1**
(45) Veröffentlichungstag und Bekanntmachung des Hinweises auf die Patenterteilung: **28.09.1994**
(21) Anmeldenummer: 91119219.3
(22) Anmeldetag: 12.11.1991
(51) Int. Cl.: B60T 8/42, B60T 8/36, F16K 31/06

(54) **Hydraulische Bremsanlage, insbesondere für Kraftfahrzeuge**
Hydraulic brake system for vehicles
Système de freinage hydraulique pour véhicules

(30) Priorität: 22.12.1990 DE 4041506
(43) Veröffentlichungstag der Anmeldung: 01.07.1992
(73) Patentinhaber: ROBERT BOSCH GMBH, 70442 Stuttgart (DE)
(72) Erfinder: Käs, Günter, W-7000 Stuttgart 40 (DE); Wilde, Werner, W-7141 Schwieberdingen (DE); Alaze, Norbert, W-7145 Markgröningen (DE); Megerle, Friedrich, Dipl.-Ing. (FH), W-7144 Asperg (DE)

(56) Entgegenhaltungen:
- DE-A- 3 045 360
- DE-A- 3 422 214
- DE-A- 3 842 370
- US-A- 3 818 927
- US-A- 4 618 189
- PATENT ABSTRACTS OF JAPAN vol. 10, no. 62 (M-460)(2119) 12. März 1986, JP-A-60 209 351 (TOYOTA) 21. Oktober 1985

## Beschreibung

### Stand der Technik

Die Erfindung geht aus von einer hydraulischen Bremsanlage mit einer Blockierschutzregeleinrichtung, insbesondere für Kraftfahrzeuge, nach der Gattung des Anspruchs 1.

Es ist schon eine solche Bremsanlage bekannt (DE-A-3 842 370). Das dort verwendete Druckbegrenzungsventil ist parallel zu einer Pumpe geschaltet und dient der Begrenzung des Pumpendrucks bei der Rückförderung von Druckmittel aus einem Druckmittelaufnehmer. Das beim Überschreiten des Ansprechdrucks des Druckbegrenzungsventils von diesem abgesteuerte Druckmittel wird erneut von der Pumpe angesaugt. Das ebenfalls bei der bekannten Bremsanlage verwendete Absperrventil ist in der Bremsleitung zwischen dem Hauptbremszylinder und dem druckseitigen Anschluß der Pumpe angeordnet. Das Ansperrventil hat den Zweck, Pulsationen der Pumpe vom Hauptbremszylinder fernzuhalten.

Aus US-A-3 818 927 ist ein Absperrventil mit integrierter Druckbegrenzungs-Funktion bekannt. Hierzu ist im Zuge einer Druckmittelleitung ein Sitzventil mit einem Ventilsitzkörper und einem ein Ventilschließglied bildenden Stößel angeordnet. Das Sitzventil ist mit Magnetkraft von einem Anker betätigbar. Dieser besitzt eine Durchgangsbohrung mit einer ventilsitzseitigen Schulter. Der Stößel greift in den Anker ein und stützt sich in der Offenstellung des Ventils mit einem Bund auf der ventilsitzabgewandten Seite der Schulter ab. Zwischen dem Ventilsitzkörper und dem Anker erstreckt sich eine Rückstellfeder. Diese greift einerseits am Ventilsitzkörper und andererseits am Anker an. Die Rückstellfeder hält bei nicht erregter elektrischer Wicklung das Absperrventil in der Offenstellung. Es ist eine zweite Druckfeder vorgesehen, welche sich teils innerhalb und teils außerhalb des Ankers erstreckt. Diese vorgespannte Druckfeder greift einerseits an einem ventilsitzabgewandten Bund des Stößels an. Andererseits ist sie über einen Bolzen, eine Kugel und eine Einstellschraube am Ventilgehäuse abgestützt. Die zweite Druckfeder weist eine geringere Vorspannkraft auf als die Rückstellfeder, da letztere in der Lage sein muß, das Ventil in der Offenstellung zu halten. Da aber die zweite Druckfeder zur Bereitstellung der Druckbegrenzungs-Funktion eine gewisse Vorspannkraft haben muß, bedeutet dies, daß die zweite Feder härter und größer sein muß als die Rückstellfeder.

Bei der Erregung einer elektrischen Wicklung des Ventils wird eine Magnetkraft erzeugt, welche den Anker in Richtung auf den Ventilsitzkörper bewegt. Dabei wird der Anker von der Kraftwirkung der zweiten Druckfeder unterstützt, bis der Stößel auf dem Ventilsitzkörper abgestützt ist. Während dieser Bewegung des Stößels erfährt die zweite Druckfeder eine Längung, d. h. ihre für die Druckbegrenzungs-Funktion notwendige Kraftwirkung auf den Stößel ist in der Schließstellung des Ventils in nachteiliger Weise geringer als in der Offenstellung. Im weiteren Verlauf des Ankerhubes bewegt sich der Anker bis zum Anschlag gegen ein Polstück. Dabei wird die Rückstellfeder noch stärker zusammengedrückt, was jedoch keine Auswirkung auf die Schließkraft des Ventils hat, aber zusätzliche Antriebsenergie erfordert. Beim Zurückstellen des Ankers muß dieser gegen die zweite Druckfeder arbeiten.

### Vorteile der Erfindung

Die erfindungsgemäße Bremsanlage mit den kennzeichnenden Merkmalen des Anspruchs 1 unterscheidet sich demgegenüber in vorteilhafter Weise dadurch, daß das vom Ventilsitz und Schließglied gebildete Sitzventil des Absperrventils in der Ventilschließstellung die Funktion des Druckbegrenzungsventils mit übernimmt, wenn der verbraucherseitige Druck den Ansprechdruck überschreitet. Die hierfür maßgebliche Druckfeder wird erst gegen Ende des Ankerhubes beim Schalten des Ventiles in die Schließstellung wirksam. In der Offenstellung des Ventils übt die Druckfeder keine Kraftwirkung auf das Schließglied aus. Die Rückstellfeder kann daher sehr viel schwächer ausgebildet sein als die Druckfeder. Beim Umschalten des Absperrventils von der Schließstellung in die Offenstellung unterstützen sowohl die Druckfeder als auch die Rückstellfeder das Zurückstellen des Ankers sowie des Schließgliedes in die Ausgangsstellung.

Das Schließglied führt beim Begrenzen des Druckes nur einen sehr kleinen Hub aus. Beim Schalten des Absperrventils in seine Durchgangsstellung, in welcher eine druckbegrenzende Funktion nicht erforderlich ist, führt das Schließglied jedoch einen sehr viel größeren Hub aus. Das Ventil ist somit in der Durchgangsstellung für Fremdkörper durchgängig. Bei der Druckbegrenzungsfunktion am Sitzventil angelagerte Fremdkörper werden jetzt ausgespült. Die Funktionssicherheit der Bremsanlage wird dadurch erhöht. Weiterhin ist die mit der erfindungsgemäßen Gestaltung erzielte Raum- und Kosteneinsparung ebenfalls von Vorteil. Da die von der Druckfeder erzeugte Schließkraft geringer ist als die auf den Anker wirkende Magnetkraft, wird darüber hinaus eine Geräuschminderung sowie eine Reduzierung des Verschleißes am Ventilsitz erzielt.

Durch die in den Unteransprüchen aufgeführten Maßnahmen sind vorteilhafte Weiterbildungen und Verbesserungen der im Hauptanspruch angegebenen Bremsanlage möglich.

Die im Anspruch 2 angegebene Maßnahme ist insofern vorteilhaft, als trotz des Einfügens einer Druckfeder zwischen den Anker und den Stößel eine Vergrößerung der axialen Baulänge des Absperrventils vermieden wird.

Mit der im Anspruch 3 gekennzeichneten Ausgestaltung wird mit einfachen Mitteln in der Ventilschließstellung ein Wirksamwerden der Druckfeder für die Druckbegrenzungsfunktion erzielt. In der Durchgangsstellung ist dagegen der Kraftfluß der Druckfeder über den Anker geschlossen, so daß der überwiegende Teil des Öffnungs- und Schließhubes des Ankers frei von der Kraft der Druckfeder ist.

Die im Anspruch 4 offenbarte Maßnahme erlaubt auf einfache Weise die Einstellung der Vorspannkraft der in die Sacklochbohrung eingefügten Druckfeder.

### Zeichnung

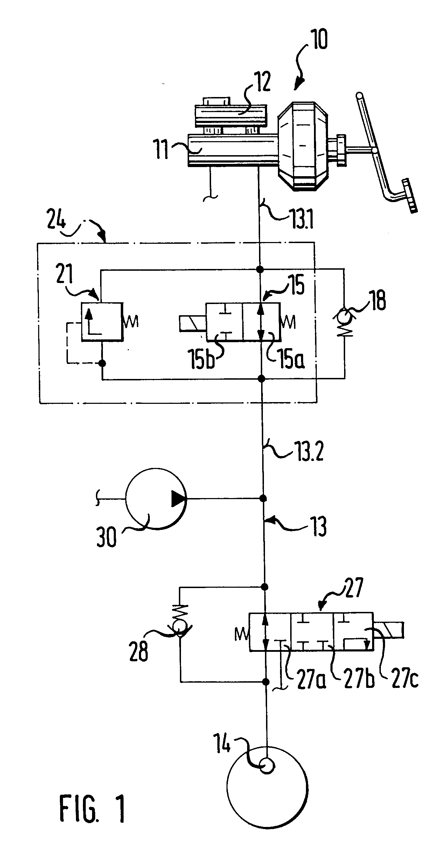

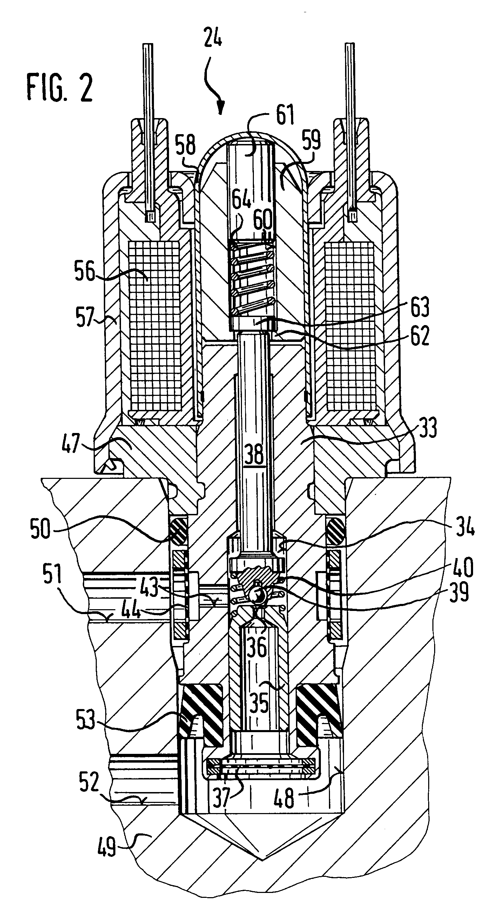

Ein Ausführungsbeispiel der Erfindung ist in der Zeichnung vereinfacht dargestellt und in der nachfolgenden Beschreibung näher erläutert. Es zeigen Figur 1 einen Teil eines Schaltschemas einer hydraulischen Bremsanlage mit einer aus Absperrventil und Druckbegrenzungsventil bestehenden Ventileinheit und Figur 2 einen Längsschnitt durch die konstruktiv ausgestaltete Ventileinheit.

### Beschreibung des Ausführungsbeispiels

Das in Figur 1 dargestellte Schaltschema gibt nur einen Teil einer hydraulischen Bremsanlage 10 mit einer Blockierschutz- und Antriebsschlupfregeleinrichtung wieder.

Die Bremsanlage 10 hat einen pedalbetätigbaren, mehrkreisigen Hauptbremszylinder 11 als Druckerzeuger mit einem Druckmittelvorratsbehälter 12. Vom Hauptbremszylinder 11 geht wenigstens eine Leitung 13 als Bremsleitung zu wenigstens einer Radbremse 14 als Verbraucher aus. In der Leitung 13 ist ein Absperrventil 15 in Form eines 2/2-Wegeventils angeordnet. Das Absperrventil 15 hat eine durch Federbetätigung erzeugbare Durchgangsstellung 15a, in welcher Druckmittelmengen zwischen dem Hauptbremszylinder 11 und der Radbremse 14 verschoben werden können. Das Absperrventil 15 hat außerdem eine durch Elektromagnetbetätigung erzeugbare Schließstellung 15b. In dieser Schließstellung 15b trennt das Absperrventil 15 einen Druckmittelfluß zwischen einem hauptbremszylinderseitigen Leitungsabschnitt 13.1 und einem radbremsseitigen Leitungsabschnitt 13.2 der Leitung 13.

Parallel zum Absperrventil 15 ist ein Rückschlagventil 18 angeordnet, welches Druckmittelfluß vom Hauptbremszylinder 1 zur Radbremse 14 unter Umgehung des Absperrventils gestattet.

Außerdem ist parallel zum Absperrventil 15 ein Druckbegrenzungsventil 21 geschaltet. Das Druckbegrenzungsventil 21 vermag bei Überschreiten eines vorbestimmten Ansprechdrucks entgegen Federkraft zu öffnen, so daß Druckmittelmengen vom Leitungsabschnitt 13.2 zum Leitungsabschnitt 13.1 und somit zum Hauptbremszylinder 11 absteuerbar sind. Das Druckbegrenzungsventil 21 verhindert daher einen unzulässig hohen Druckanstieg im radbremsseitigen Bereich der Bremsanlage 10.

Das Absperrventil 15 und das Druckbegrenzungsventil 21 sind, wie in Figur 1 strichpunktiert angedeutet, zu einer Ventileinheit 24 baulich und funktionell zusammengefaßt. Diese Ventileinheit 24 ist später ausführlich beschrieben.

Zwischen dem Absperrventil 15 und der Radbremse 14 ist außerdem in der Leitung 13 eine Drucksteuerventilanordnung 27 als Element der Blockierschutz- und Antriebsschlupfregeleinrichtung angeordnet. Die Drucksteuerventilanordnung 27 hat eine durch Federbetätigung erzeugbare Stellung 27a, in welcher der Leitungsabschnitt 13.2 zur Radbremse 14 durchgängig ist. Außerdem besitzt die Drucksteuerventilanordnung 27 eine durch Elektromagnetbetätigung einstellbare Stellung 27b für Druckhalten in der Radbremse 14, bei der der Leitungsabschnitt 13.2 zur Radbremse unterbrochen ist. Eine ebenfalls durch Elektromagnetbetätigung einstellbare dritte Stellung 27c der Drucksteuerventilanordnung 27 dient zum Absteuern von Druckmittelmengen aus der Radbremse 14 zum Zweck des Druckabbaus. Parallel zur Drucksteuerventilanordnung 27 ist ein Rückschlagventil 28 angeordnet, mit dem Druckmittelfluß von der Radbremse 14 zum Hauptbremszylinder 11 unter Umgehung der Drucksteuerventilanordnung möglich ist.

Außerdem ist an den Leitungsabschnitt 13.2 eine Druckquelle 30 in Form einer Hochdruckpumpe angeschlossen. Die Druckquelle 30 vermag im Antriebsschlupfregelbetrieb, während dem das Absperrventil 15 in seine Schließstellung 15b geschaltet ist, Druckmittel in die Leitung 13 einzuspeisen. Da das Druckmittel in den Stellungen 27b und 27c der Drucksteuerventilanordnung 27 nicht von der Radbremse 14 aufgenommen werden kann, öffnet das Druckbegrenzungsventil 21 bei Überschreiten seines Ansprechdrucks und steuert das Druckmittel zum Hauptbremszylinder 11 ab.

Die Ventileinheit 24 hat den in Figur 2 dargestellten Aufbau:
Ein Ventilgehäuse 33 weist eine abgestufte Längsbohrung 34 auf, in deren unterem Bereich eine Hülse 35 mit einem Ventilsitz 36 eingepreßt ist. An ihrem unteren Ende ist die Längsbohrung 34 durch ein Scheibenfilter 37 abgedeckt. Im oberen Abschnitt der Längsbohrung 34 erstreckt sich ein Stößel 38, welcher ventilsitzseitig ein Schließglied 39 in Form einer Kugel trägt. Der Ventilsitz 36 und das Schließglied 39 bilden ein Sitzventil. Dieses ist in der Zeichnung in seiner Durchgangsstellung wiedergegeben, welche durch eine sich einerseits an der Ventilsitzhülse 35 und andererseits am Stößel 38 abstützende Rückstellfeder 40 erzeugt ist.

Das Ventilgehäuse 33 hat eine Querbohrung 43, welche im Bereich des Ventilsitzes 36 in die Längsbohrung 34 einmündet. Die Querbohrung 43 ist durch ein das Ventilgehäuse 33 umgreifendes Hülsenfilter 44 abgedeckt.

Das mit einem Flansch 47 verbundene Ventilgehäuse 33 greift in einer Aufnahmebohrung 48 eines Gehäuseblocks 49 ein. (Die Befestigung der Ventileinheit 24 am Gehäuseblock 49 ist in der Zeichnung nicht dargestellt.) Die Aufnahmebohrung 48 ist mündungsseitig durch einen auf dem Ventilgehäuse 33 sitzenden Dichtungsring 50 druckmitteldicht verschlossen. Im Bereich der Querbohrung 43 mündet eine Bohrung 51, am unteren Ende des Ventilgehäuses 33 eine Bohrung 52 in die Aufnahmebohrung 48 des Gehäuseblocks 49 ein. Die Bohrung 51 entspricht dem vom Hauptbremszylinder 11 herkommenden Leitungsabschnitt 13.1, die Bohrung 52 dem zur Radbremse 14 führenden Leitungsabschnitt 13.2. Eine am Ventilgehäuse 33 zwischen den beiden Bohrungen 51 und 52 aufgenommene Manschette 53 verkörpert im Zusammenwirken mit der Aufnahmebohrung 48 das Rückschlagventil 18.

Der Flansch 47 der Ventileinheit 24 trägt eine elektrische Spule 56, welche von einem mit dem Flansch 47 verbundenen, topfförmigen Gehäusemantel 57 übergriffen ist. Innerhalb der Spule 56 erstreckt sich eine druckmitteldicht mit dem Ventilgehäuse 33 verbundene Ankerführungshülse 58. In der Ankerführungshülse 58 ist ein Anker 59 längsbewegbar aufgenommen. Dieser hat eine gleichachsig zum Stößel 38 verlaufende Sacklochbohrung 60. Die Tiefe der gegen den Stößel 38 offenen Sacklochbohrung 60 ist durch einen gleichachsig im Anker 59 verlaufenden Einpreßbolzen 61 bestimmt. Stößelseitig besitzt die Sacklochbohrung 60 eine ihren Querschnitt verengende Bohrungsstufe 62. Innerhalb der Sacklochbohrung 60 befindet sich eine kreiszylindrische Scheibe 63 sowie eine vorgespannte Druckfeder 64. Die Druckfeder 64 greift einerseits am Einpreßbolzen 61 und andererseits an der Scheibe 63 an, welche sich in der gezeichneten Durchgangsstellung des Sitzventils 36, 39 wiederum an der Bohrungsstufe 62 abstützt. Die Vorspannung der Druckfeder 64 ist durch die Einpreßtiefe des Einspreßbolzens 61 im Anker 59 einstellbar. Die Scheibe 63 dient als Zwischenglied zwischen der Druckfeder 64 und dem unter der Wirkung der Rückstellfeder 40 an der Scheibe angreifenden Stößel 38. Die Vorspannkraft der Druckfeder 64 ist größer als diejenige der Rückstellfeder 40. Zwischen den einander zugewandten Stirnflächen des Ankers 59 und des Ventilgehäuses 33 befindet sich ein dem Ankerhub entsprechender Luftspalt, dessen Breite größer ist als der Hab, den das Schließglied 39 aus der gezeichneten Stellung bis zum Angriff am Ventilsitz 36 zurücklegt.

Beim Bestromen der Spule 56 wird ein Magnetfeld erzeugt, welches eine Kraft auf den Anker 59 ausübt und diesen in Richtung auf das Ventilgehäuse 33 verschiebt. Dabei nimmt die Scheibe 63 den Stößel 38 unter Überwindung der Rückstellfeder 40 mit. Im Verlauf der Bewegung des Ankers 59 trifft das Schließglied 39 auf den Ventilsitz 36 der Hülse 35. Hierdurch wird die Bewegung des Stößels 38 beendet. Da der Anker 59 noch nicht seinen vollen Hab ausgeführt hat und sich daher weiter gegen das Ventilgehäuse 33 bewegt, hebt die Scheibe 63 unter Überwindung der Vorspannkraft der Druckfeder 64 von der Bohrungsstufe 62 ab. Während bisher der Kraftfluß der Druckfeder 64 über die Scheibe 63, den Anker 59 und den Einpreßbolzen 61 geschlossen war, übt am Ende des Ankerhubes die Druckfeder 64 eine Axialkraft auf den Stößel 38 aus. Diese vom Stößel 38 auf das Schließglied 39 übertragene Kraft ist niedriger als die Magnetkraft des Ankers 59 und wirkt als auf den Ansprechdruck des Druckbegrenzungsventils 21 abgestimmte Schließkraft.

Bei am Ventilsitz 36 angreifendem Schließglied 39 übt die Ventileinheit 24 die Funktion des Absperrventils 15 in seiner Schließstellung 15b sowie die Funktion des Druckbegrenzungsventil 21 aus.

Bei unzulässig großem Druckanstieg auf Seiten der Bohrung 52 hebt bei Erreichen des Ansprechdrucks des Druckbegrenzungsventils 21 das Schließglied 39 entgegen der Kraft der Druckfeder 64 vom Ventilsitz 36 ab, so daß Druckmittel zur Bohrung 51 abströmen kann.

Beim Beenden der Bestromung der Spule 56 bricht das Magnetfeld zusammen und der Anker 59 wird zunächst durch die Wirkung der Druckfeder 64 bis zum Angriff der Scheibe 63 an der Bohrungsstufe 62 nach oben bewegt. Anschließend übernimmt die Rückstellfeder 40 das Zurückführen von Anker 59 sowie Stößel 38 in die Ausgangsstellung, in welcher das Absperrventil 15 seine Durchgangsstellung 15a einnimmt und das Druckbegrenzungsventil 21 unwirksam ist. Fremdkörper, welche sich beim Wirksamwerden der Druckbegrenzungsfunktion am Ventilsitz 36 abgelagert haben, werden jetzt bei vollem Ventilhub vom Druckmittel ausgespült.

## Patentansprüche

1. Hydraulische Bremsanlage (10) mit einer Blockierschutzregeleinrichtung, insbesondere für Kraftfahrzeuge,
- mit einer Druckmittel führenden, zwischen einem Druckerzeuger (Hauptbremszylinder 11) und einem Verbraucher (Radbremse 14) verlaufenden Leitung (Bremsleitung 13),
- mit einem in der Leitung (Bremsleitung 13) angeordneten Absperrventil (15),
- mit einer verbraucherseitig Druckmittel in die Leitung (Bremsleitung 13) einspeisenden Druckquelle (Hochdruckpumpe 30) und
- mit einem Druckbegrenzungsventil (21),
gekennzeichnet durch die Merkmale:
- die Bremsanlage (10) hat auch eine Antriebschlupfregeleinrichtung,
- das Absperrventil (15) ist mit einem verbraucherseitigen Ventilsitz (36) und einem druckerzeugerseitigen Schließglied (39) versehen, welches durch Magnetkraftwirkung auf einen Anker (59) am Ventilsitz (36) anzugreifen vermag,
- parallel zum Absperrventil (15) ist ein Druckbegrenzungsventil (21) geschaltet, mit dem bei Überschreiten eines Ansprechdrucks Druckmittel zum Druckerzeuger (Hauptbremszylinder 11) absteuerbar ist,
- zwischen dem Anker (59) und dem Schließglied (39) des Absperrventils (15) ist eine Druckfeder (64) angeordnet, welche in der Ventilschließstellung eine auf den Ansprechdruck abgestimmte Schließkraft wenigstens mittelbar auf das Schließglied (39) ausübt,
- zwischen dem Schließglied (39) und seinem Ventilsitz (36) ist eine Rückstellfeder (40) angeordnet.

2. Hydraulische Bremsanlage nach Anspruch 1, dadurch gekennzeichnet, daß gleichachsig zu einem das Schließglied (39) tragenden Stößel (38) im Anker (59) eine Sacklochbohrung (60) für die Druckfeder (64) gebildet ist, welche unter Vorspannung wenigstens mittelbar einerseits am Anker (59) und andererseits am Stößel (38) angreift.

3. Hydraulische Bremsanlage nach Anspruch 2, dadurch gekennzeichnet, daß in der Sacklochbohrung (60) zwischen der Druckfeder (64) und dem Stößel (38) ein Zwischenglied (Scheibe 63) angeordnet ist, an dessen einer Seite die Druckfeder (64) und an dessen anderer Seite der Stößel (38) angreifen, und daß das Zwischenglied (Scheibe 63) in der Ventilschließstellung vom Stößel (38) von einer die Sacklochbohrung (60) verengenden Bohrungsstufe (62) abgehoben ist.

4. Hydraulische Bremsanlage nach Anspruch 2, dadurch gekennzeichnet, daß die Tiefe der Sacklochbohrung (60) durch einen gleichachsig im Anker (59) verlaufenden Einpreßbolzen (61) bestimmt ist.

## Claims

1. Hydraulic brake system (10) having an anti-lock protection control device, in particular for motor vehicles,
- having a conduit (brake conduit 13) carrying a pressure medium and extending between a pressure generator (main brake cylinder 11) and a consumption unit (wheel brake 14),
- having a shut-off valve (15) arranged in the conduit (brake conduit 13),
- having a pressure source (high-pressure pump 30) feeding pressure medium at the consumption unit end into the conduit (brake conduit 13) and
- having a pressure limiting valve (21),
characterized by the features:
- the brake system (10) also has a drive-slip control device,
- the shut-off valve (15) is provided with a valve seat (36) at the consumption unit end and a closing element (39) at the pressure generator end, which closing element can act on the valve seat (36) by means of magnetic force action on an armature (59),
- a pressure limiting valve (21), by means of which pressure medium can be spilled to the pressure generator (main brake cylinder 11) when a response pressure is exceeded, is connected in parallel with the shut-off valve (15),
- a compression spring (64) which, in the valve shut-off position, exerts a closing force matched to the response pressure at least indirectly on the closing element (39), is arranged between the armature (59) and the closing element (39) of the shut-off valve (15),
- a return spring (40) is arranged between the closing element (39) and its valve seat (36).

2. Hydraulic brake system according to Claim 1, characterized in that a pocket hole bore (60) for the compression spring (64), which acts under preload at least indirectly on the armature (59) at one end and on a push-rod (38) at the other end, is formed in the armature (59) on the same axis as the push-rod (38), which carries the closing element (39).

3. Hydraulic brake system according to Claim 2, characterized in that an intermediate element (disc 63), one end of which is acted on by the compression spring (64) and the other end of which is acted on by the push-rod (38), is arranged in the pocket hole bore (60) between the compression spring (64) and the push-rod (38) and in that, in the valve shut-off position, the intermediate element (disc 63) is raised by the push-rod (38) from a bore step (62) restricting the pocket hole bore (60).

4. Hydraulic brake system according to Claim 2, characterized in that the depth of the pocket hole bore (60) is determined by a press-in pin (61) extending in the armature (59) on the same axis as the pocket hole bore (60).

## Revendications

1. Système hydraulique de freinage (10) avec un dispositif de régulation anti-blocage, en particulier pour véhicules automobiles,
- avec une canalisation (canalisation de freinage 13) laissant passer un agent sous pression, s'étendant entre un appareil produisant la pression (maître cylindre de freinage 11) et un appareil utilisant le fluide sous pression (dispositif de freinage de roue 14),
- avec une soupape d'arrêt (15) disposée dans la canalisation (canalisation de freinage 13),
- avec un agent sous pression, du côte de l'appareil utilisateur, dans la source de pression (pompe haute pression 30) alimentant la canalisation (canalisation de freinage 13) et
- avec une soupape de limitation de la pression (21), caractérisé par les particularités suivantes :
- le système de freinage (10) a aussi un dispositif de régulation contre le patinage à l'entraînement,
- la soupape d'arrêt (15) est pourvue d'un siège de soupape (36) du côté de l'appareil utilisateur et d'un organe de fermeture (39) du côté de l'appareil producteur de pression, qui a la possibilité de venir en prise sur le siège de soupape (36) sous l'action de la force électromagnétique sur une armature (59),
- parallèlement à la soupape d'arrêt (15), on monte une soupape de limitation de la pression (21), avec laquelle l'agent sous pression est ramené à l'appareil produisant la pression (maître cylindre de freinage 11) quand la pression d'actionnement est dépassée,
- entre l'armature (59) et l'organe de fermeture (39) de la soupape d'arrêt (15) on dispose un ressort de pression (64) qui exerce, quand la soupape est en position de fermeture, une force de fermeture ajustée à la pression de déclenchement, au moins indirectement sur l'organe de fermeture (39),
- entre l'organe de fermeture (39) et son siège de soupape (36) on dispose un ressort de rappel (40).

2. Système hydraulique de freinage selon la revendication 1, caractérisé en ce que l'on constitue un trou borgne (60) pour le ressort de pression (64) avec le même axe qu'un poussoir portant l'organe de fermeture (39) dans l'armautre (59), ressort qui, en pré-contrainte, vient en prise au moins indirectement, d'une part sur l'armature (59) et d'autre part sur le poussoir (38).

3. Système hydraulique de freinage selon la revendication 2, caractérisé en ce que l'on dispose dans le trou borgne (60) entre le ressort de pression (64) et le poussoir (38) un organe intermédiaire (disque 63) sur l'un des côtés duquel vient en prise le ressort de pression (64) et sur l'autre côté duquel vient en prise le poussoir (38) et en ce que l'organe d'intermédiaire (disque 63) est soulevé quand la soupape est en position de fermeture par le poussoir (38) à partir d'un gradin d'alésage (62) rétrécissant le trou borgne (60).

4. Système hydraulique de freinage selon la revendication 2, caractérisé en ce que la profondeur du trou borgne (60) est déterminée par un axe de pressage (61) s'étendant avec le même axe dans l'armature (59).
